Europäisches Patentamt

(19) European Patent Office

Office européen des brevets

(11) Numéro de publication: **0 022 010**

**A1**

(12) # DEMANDE DE BREVET EUROPEEN

(21) Numéro de dépôt: **80400928.0**

(22) Date de dépôt: **20.06.80**

(51) Int. Cl.³: **A 01 K 1/015**
**C 05 F 3/00**

(30) Priorité: **22.06.79 FR 7916172**

(43) Date de publication de la demande:
**07.01.81 Bulletin 81/1**

(84) Etats Contractants Désignés:
**AT BE CH DE GB LI LU NL**

(71) Demandeur: **Passeri, Marcel Albert**
**Chateau de Jallanges Vernon St Brenne**
**F-37210 Vouvray(FR)**

(72) Inventeur: **Passeri, Marcel Albert**
**Chateau de Jallanges Vernon St Brenne**
**F-37210 Vouvray(FR)**

(74) Mandataire: **Harlé, Robert et al,**
**c/o Cabinet Harlé & Lechopiez 21, rue de la**
**Rochefoucauld**
**F-75009 Paris(FR)**

(54) **Litière pour animaux et produits en dérivant, en particulier des amendements.**

(57) La litière se compose de sous-produits de cannabinacées ou de pulpes de fruits à grand pouvoir d'absorption des matières humides, tamisés à la grosseur désirée, en mélange ou à l'état d'élément individuel.

Application des litières et amendements en agriculture.

EP 0 022 010 A1

1

"Litière pour animaux et produits en dérivant, en particulier des amendements".

La présente invention concerne une nouvelle
litière pour animaux, tels que chevaux, bovins, ovins,
chats, gallinacés et, de façon générale, une litière
pour le séjour des animaux, ainsi que ses applications
en agriculture, notamment en tant qu'amendement végétal et organique pour la fertilisation des sols.

On connaît, à l'heure actuelle, dans la
technique, différentes litières selon qu'il s'agisse
d'ongulés, ou d'animaux tels que le chat.

Les litières pour ongulés, en particulier
pour les chevaux, sont, généralement, en paille. Les
litières en paille présentent de nombreux inconvénients. D'une part, leur prix de revient est relativement important, et d'autre part elles renferment
des substances contaminantes telles que de la poussière, des résidus, des moisissures et analogues susceptibles de provoquer des troubles chez les animaux.

La paille est un produit dont les caractéristiques d'absorption sont relativement médiocres.

Pour maintenir des conditions d'hygiène
convenables, il est nécessaire de renouveler fréquemment les litières en paille. Il en résulte une main
d'oeuvre onéreuse pour la mise en place et l'évacuation des litières des divers lieux de séjour des animaux. Du fait de son renouvellement assez fréquent, il faut aussi prévoir un stockage de la paille en quantité suffisante. Un tel stockage n'est pas exempt de risques, et il est bien connu que les meules de pailles sont trop souvent le foyer d'incendies.

Le brevet US 2 179 591 décrit une litière pour gallinacés à base de pulpes de canne à sucre, notamment de bagasse. Ledit produit renferme la partie médulleuse déchiquetée de canne à sucre.

Le brevet US 1 967 333 décrit également une litière pour animaux, notamment pour gallinacés, à base de bagasse. La bagasse est traitée et le produit final résultant est dépourvu de parties médulleuses.

Il est bien connu que la canne à sucre appartient comme la paille à la famille des graminacées qui sont des monocotylédones.

Récemment, on a utilisé de la tourbe en tant que litière, mais ce produit présente l'inconvénient majeur de coller aux sabots des chevaux en raison de sa nature même.

En ce qui concerne les litières pour chats, ces dernières sont en général à base de sciure de bois et de divers produits analogues. Ces litières à base de sciure de bois ont un faible pouvoir d'absortion de l'humidité. Ainsi, comme dans le cas précité pour les litières pour ongulés, il est nécessaire de changer fréquemment lesdites litières pour chats car les odeurs nauséabondes d'urine se répandent très vite.

Conformément à la présente invention, on a trouvé de façon surprenante et inattendue que l'on pouvait obtenir une litière supprimant tous les inconvénients précités.

La litière pour animaux de l'invention tels que chevaux, bovins, ovins, chats, gallinacés, se compose de sous-produits de cannabinacées ou de pulpes de raisin à grand pouvoir d'absorption des matières humides, tamisés à la grosseur désirée, en mélange ou à l'état d'élément individuel.

La litière de l'invention est constituée plus particulièrement d'anas de chanvre obtenus après extraction des fibres et des graines de l'intérieur de la plante par traitement mécanique sans produits chimiques.

Par anas de chanvre, terme bien connu des spécialistes en la matière, on entend l'intérieur ou coeur de la plante obtenu en tant que sous-produit après extraction des fibres et graines et traité mécaniquement sans produits chimiques.

Le produit obtenu est tamisé et criblé selon une granulométrie comprise dans la gamme de 0,5 à 10 mm.

Un tel produit répond à l'analyse et aux caractéristiques ci-après :

|  | en % du produit brut |
|---|---|
| Humidité | 14 à 18 |
| Cendres | 3 à 5 |
| Matière organique | 80 à 85 |
| Azote | 0,40 à 1,0 |
| Phosphore $P_2O_5$ | 0,20 à 0,5 |
| Potassium $K_2O$ | 0,96 à 1,5 |
| Calcium CaO | 0,89 à 1,4 |
| Magnésium MgO | 0,06 à 0,2 |
| Sodium Na | 0,09 |
| Cellulose | 45 |
| Pentosanes | 16 |
| Carbone | 44 - 45 |
| Hydrogène | 5 - 6 |
| Soufre | 0,16 |
| Oxygène | 36 |

| | en p.p.m. du produit brut |
|---|---|
| Bore | 21 |
| Cuivre | 0,6 |
| Zinc | 0 |

| | en meq pour 100 g du produit brut |
|---|---|
| Capacité d'absorption pour élément minéraux | 24 |

| | en % du produit brut |
|---|---|
| Capacité de rétention pour l'eau | 415 |
| pH | 7 |
| C/N | 50 |
| PCI | 3900 sur brut |
| | 4200 sur sec |
| Densité | 150 kg/m3 |

La litière pour animaux selon l'invention comprend essentiellement de la pulpe de raisin, séparée du marc par une extraction d'alcool et d'acide tartrique, neutralisée, lavée et déshydratée.

L'opération de déshydratation est fonction de l'application du produit. Elle peut être plus ou moins poussée selon les caractéristiques d'absorption désirées. Cependant, il est préférable de déshydrater les pulpes de raisin selon un taux égal ou supérieur à 90%. Le produit résultant renferme environ 16% de protéines et de 30 à 35% de cellulose, et a une qualité d'absorption des matières humides constituées principalement d'eau et d'urine pouvant aller jusqu'à 250%.

Ledit produit est ensuite tamisé à la grosseur désirée.

Le produit final est tamisé selon une granulométrie appropriée qui est fonction de l'utilisation envisagée, c'est-à-dire soit en tant que litières pour ongulés, soit en tant que litières pour chats, et cette gamme s'étend entre 0,5 et 20 mm.

Le produit de l'invention peut comprendre, en outre, une charge pulvérulente.

La charge pulvérulente est, en général, de la sciure de bois ; cependant, toute substance analogue peut être incorporée.

Ainsi, dans le cas de la réalisation d'une litière pour chats, il est préférable que la charge pulvérulente soit constituée de chaux éteinte et de dolomie.

Selon la présente invention, la sciure de bois est additionnée aux pulpes de raisin traitées à raison d'une quantité comprise dans la gamme de 0 à 50% en poids par rapport au poids du mélange final des deux constituants dans le cas d'une litière pour ongulés.

Lors de la réalisation d'une litière pour chats, la charge pulvérulente peut avantageusement être constituée de chaux éteinte et de dolomie. Elle est alors additionnée aux pulpes de raisin traitées à raison d'une quantité comprise dans la gamme de 0 à 30% en poids pour chaque constituant de ladite charge par rapport au poids du mélange final, notamment de 0 à 10% et plus précisément de 0 à 5% en poids.

La litière selon la présente invention est constituée, selon une variante de mise en oeuvre, d'un mélange d'anas de chanvre et de pulpes de raisin à raison de 70% en poids d'anas de chanvre pour 30% en poids de pulpes de raisin.

Dans le cas de la préparation d'une litière à base d'anas de chanvre, ce sous-produit ne nécessite pas une déshydratation comme dans le cas de la pulpe de raisin et est donc un produit avantageux.

La litière obtenue selon la présente invention présente une absorption des matières humides allant jusqu'à 250%.

A titre de comparaison, on peut mentionner que l'absorption de la sciure de bois est seulement de 30 à 40%.

La litière peut séjourner sous les animaux de 21 à 60 jours en fonction du climat et des saisons, sans émanation de mauvaises odeurs, sans l'apparition de mouches autour des animaux en raison de sa composition.

Ainsi, à titre d'exemple, on peut indiquer que pour des animaux séjournant de 15 à 20 heures par jour en écurie, une durée moyenne de 40 jours de la litière est aisément atteinte.

La litière selon la présente invention ne demande aucun travail d'enlèvement pendant une telle durée. Il est seulement nécessaire d'effectuer un petit travail de brassage à la fourche ou au rateau en vue de l'aération et de l'égalisation de ladite litière à des intervalles plus ou moins rapprochés.

Le poids de litière nécessaire pour un box d'une dimension de 3 m x 3 m est sensiblement de 300 kg pour un séjour tel que celui précité dans le cas de l'utilisation de pulpes de raisin et de 150 kg dans le cas de l'application d'anas de chanvre.

En ce qui concerne les économies de main d'oeuvre, il est intéressant de noter que le gain de temps enregistré par l'utilisation de la litière selon la présente invention, comparée à une litière du genre paille, est de l'ordre de 6 heures par jour pour une écurie comprenant de 20 à 25 chevaux compte-tenu du temps nécessaire aux corvées d'entrée et de sortie des litières des écuries.

Les économies de main d'oeuvre grâce à la présente invention sont considérables. On sait qu'une litière de paille se change tous les trois jours en raison de la mauvaise absorption des urines. La paille est toujours humide et souillée. La litière selon la présente invention présente une qualité d'absorption des matières humides (urine et eau) de 250 % pendant une durée de trois semaines à deux mois selon les cas. Il en est ainsi, par exemple, dans un box pour un cheval avec une quantité de litière de 150 à 300 kg répartie sur 10 cm d'épaisseur pour une surface de 10 m$^2$.

Il faut ajouter également la réduction des travaux de réception et de stockage de la paille ainsi que la suppression des risques d'incendies.

Les chevaux, et plus généralement tous les animaux, sont très sensibles aux troubles digestifs. Les troubles d'origine digestive vont de la simple indisposition à l'attaque mortelle. Il convient de bien connaître la nature, les causes et le traitement des accidents digestifs les plus courants. Plusieurs de ces accidents sont directement liés à l'absorption d'aliments avariés et surtout des litières de paille qui contiennent de la poussière, des moisissures, des engrais chimiques et des pesticides. Il est bien connu que les cultures sont traitées par des substances destinées à détruire les insectes et les mauvaises herbes. L'accumulation de résidus solides ou de gaz dans les parties étroites de l'intestin peuvent provoquer une forte augmentation de la pression ainsi que des coliques. L'intestin est gorgé de ces produits dégageant une forte quantité de toxines qui peuvent provoquer un accès de fourbure.

La litière selon l'invention ne provoque pas de tels troubles digestifs et l'animal peut en consommer sans l'apparition d'aucun trouble. Cependant, compte-tenu de la composition et en particulier de la teneur en protéines et en cellulose de la litière, l'animal n'a pas tendance à consommer cette dernière, même en faible quantité.

Pour tester les propriétés de la litière de l'invention, on a réalisé une expérience en ne renouvelant pas pendant 10 jours la litière pour chat répondant à la composition mentionnée plus haut (pulpes de raisin et / ou anas de chanvre, chaux éteinte, dolomie) et on a constaté qu'il ne se dégageait aucune odeur d'urine de chat et qu'il se produisait une absorption total des matières.

Le même essai a été mis en oeuvre avec des matières pour litière disponibles sur le marché. Au bout de deux à trois jours, avec lesdites matières, on a été obligé de changer la litière en raison de l'absorption de l'humidité qui se situe dans la gamme de 20 à 50%.

La présente invention a également pour objet l'application en agriculture de la litière répondant à la composition mentionnée plus haut en tant qu'amendement végétal et organique pour la fertilisation des sols.

L'amendement végétal et organique pour la fertilisation des sols se compose de la litière selon l'invention mélangée aux déjections animales, et est obtenu après stockage pour la fermentation pendant une durée d'environ 1 mois.

Le rapport pondéral litière : déjections animales peut varier dans de très larges limites en fonction tant du temps de séjour des animaux que de celui de la litière. Ce rapport pondéral litière : déjections animales peut, par exemple, être de 1/2. Le poids de fumier obtenu peut varier entre 2 et 3 fois le poids de litière mis en oeuvre et, ainsi, à titre d'exemple, on peut obtenir 900 kg d'amendement organique avec 300 kg de litière en une durée relativement brève.

L'amendement pour une humidité voisine de 30% répond à l'analyse suivante :

| | | | |
|---|---|---|---|
| - matières organiques | 60 | à 80 | % |
| - rapport matières organiques / azote organique | 25 | à 40 | % |
| - azote | 2 | à 2,5 | % |
| - phosphore ($P_2O_5$) | 0,3 | à 0,5 | % |
| - potasse ($K_2O$) | 1,2 | à 1,5 | % |
| - calcium | 1,7 | à 2 | % |
| - magnésium | 0,2 | à 0,3 | % |
| - soufre | 0,1 | à 0,2 | % |

Les valeurs obtenues sont exprimées en pour cent en poids par rapport au poids total.

L'analyse en oligo-éléments, exprimée en parties par million, ppm, est la suivante :

| | | |
|---|---|---|
| - fer | 1000 à | 2000 |
| - fluor | 40 à | 60 |
| - chrome | 6 à | 8 |
| - nickel | 30 à | 40 |
| - bore | 60 à | 88 |
| - cuivre | 100 à | 120 |
| - manganèse | 100 à | 120 |
| - molybdène | 0,3 à | 0,4 |
| - zinc | 70 à | 90. |

Le pH de l'amendement selon la présente invention a été déterminé et est compris dans la gamme de 6,5 à 8.

L'amendement de la présente invention peut être appliqué tel quel ou en combinaison avec divers produits.

En vue de l'application de l'amendement de l'invention à diverses plantes et à divers produits

10

végétaux, on a incorporé dans ledit amendement une quantité de l'ordre de 4,5 % en poids de résidus de tabac par rapport au poids total pour avoir un apport en azote et en calcium.

L'amendement de la présente invention ne contient aucun produit chimique et est d'une qualité bien supérieure au fumier de cheval mélangé à la paille qui renferme des pesticides agricoles (désherbants ou engrais chimiques) nuisibles, en particulier, à la culture légumière et maraîchère.

Cet amendement trouve une application particulièrement intéressante dans la culture maraîchère intensive qui exige du fumier pour obtenir un sol idéal.

L'application de l'amendement selon la présente invention permet d'obtenir, entre autres :

   - une amélioration de la structure des sols ;
   - une amélioration de leur capacité d'échange avec les sels et l'eau et une diminution des pertes par lessivage ;
   - une amélioration des processus de décomposition des matières organiques en amenant les micro-organismes indispensables pour la fertilité des sols ;
   - une action fertilisante lente et prolongée qui soutient la plante tout au long de son cycle végétal ;
   - un fumier de fond incomparable.

Il convient d'observer que l'amendement de l'invention à base d'anas de chanvre est un produit quatre fois plus riche en éléments fertilisants qu'un fumier de ferme.

L'invention n'est pas limitée aux modes de réalisation décrits en détail, car diverses modifications peuvent y être apportées sans sortir de son cadre.

## REVENDICATIONS

1. Litière pour animaux, caractérisée en ce qu'elle se compose de sous-produits de cannabinacées ou de pulpes de raisin à grand pouvoir d'absorption des matières humides, tamisés à la grosseur désirée, en mélange ou à l'état d'élément individuel.

2. Litière selon la revendication 1, caractérisée en ce qu'elle est constituée d'anas de chanvre obtenu après extraction des fibres et des grains de l'intérieur de la plante par traitement mécanique sans produits chimiques répondant à la composition et à l'analyse ci-après :

| | en % du produit brut | | |
|---|---|---|---|
| Humidité | 14 | à | 18 |
| Cendres | 3 | à | 5 |
| Matière organique | 80 | à | 85 |
| Azote | 0,40 | à | 1,0 |
| Phosphore $P_2O_5$ | 0,20 | à | 0,5 |
| Potassium $K_2O$ | 0,96 | à | 1,5 |
| Calcium CaO | 0,89 | à | 1,4 |
| Magnésium MgO | 0,06 | à | 0,2 |
| Sodium Na | 0,09 | | |
| Cellulose | 45 | | |
| Pentosanes | 16 | | |
| Carbone | 44 | – | 45 |
| Hydrogène | 5 | – | 6 |
| Soufre | 0,16 | | |
| Oxygène | 36 | | |
| | en p.p.m du produit brut | | |
| Bore | 21 | | |
| Cuivre | 0,6 | | |
| Zinc | 0 | | |

|  | en meq pour 100g du produit brut |
|---|---|
| Capacité d'absorption pour éléments minéraux | 24 |
|  | en % du produit brut |
| Capacité de rétention pour l'eau | 415 |
| pH | 7 |
| C/N | 50 |
| PCI | 3900 sur brut |
|  | 4200 sur sec |

Densité 150 kg/m3

3. Litière pour animaux selon la revendication 1, caractérisée en ce qu'elle est constituée de pulpes de raisin séparées du marc par une extraction d'alcool et d'acide tartrique, neutralisees, lavées et déshydratées.

4. Litière selon la revendication 3, caractérisée en ce que le produit est déshydraté à une valeur égale ou supérieure à 90%.

5. Litière selon l'une quelconque des revendications 3 ou 4, caractérisée en ce que le produit renferme environ 16% de protéines et 30 à 35% de cellulose et présente une absorption des matières humides constituées principalement d'eau et d'urine allant jusqu'à 250%.

6. Litière selon l'une quelconque des revendications 1 à 5, caractérisée en ce qu'elle est constituée d'un mélange d'anas de chanvre et de pulpes de raisin à raison de 70% en poids d'anas de chanvre pour 30% en poids de pulpes de raisin.

7. Litière selon l'une quelconque des revendications 1 à 6, caractérisée en ce que le produit est tamisé à la grosseur désirée selon une granulométrie comprise dans la gamme de 0,5 à 10 mm.

8. Litière selon l'une quelconque des revendications 1 à 7, caractérisée en ce qu'elle comprend en outre une charge pulvérulente.

9. Litière selon l'une quelconque des revendications 1 à 8, caractérisée en ce que la charge pulvérulente est de la sciure de bois.

10. Litière selon l'une quelconque des revendications 1 à 9, caractérisée en ce que la charge pulvérulente est une charge constituée de chaux éteinte et de dolomie.

11. Litière selon l'une quelconque des revendications 1 à 10, caractérisée en ce que la sciure de bois est additionnée à la pulpe de raisin traitée à raison d'une quantité comprise dans la gamme de 0 à 50 % en poids.

12. Litière selon l'une quelconque des revendications 1 à 11, caractérisée en ce que la charge pulvérulente est additionnée à la pulpe de raisin traitée à raison d'une quantité comprise dans la gamme de 0 à 30% en poids pour chaque constituant de ladite charge par rapport au poids du mélange final, notamment de 0 à 10% et plus précisément de 0 à 5% en poids.

13. Amendement végétal et organique pour la fertilisation des sols, caractérisé en ce qu'il renferme la litière selon l'une quelconque des revendications 1 à 12 mélangée aux déjections animales, et est obtenu après stockage pour la fermentation pendant une durée d'environ 1 mois.

14. Amendement selon la revendication.13, caractérisé en ce que le fumier, pour une humidité voisine de 30% , répond à l'analyse ci-après, exprimée en pour cent en poids :

-matières organiques       60 à 80%

  -rapport matières orga-

   niques/azote organique   25 à 40%

  -azote                     2 à  2,5%

  -phosphore ($P_2O_5$)     0,3 à  0,5%

  -potasse ($K_2O$)       1,2 à  1,5%

  -calcium          1,7 à  2%

  -magnésium        0,2 à  0,3%

  -soufre           0,1 à  0,2%

et à l'analyse suivante en oligo-éléments, exprimés en parties par million, ppm :

  -fer           1000 à 2000

  -fluor          40 à   60

  -chrome         6 à    8

  -nickel        30 à   40

  -bore          60 à   88

  -cuivre       100 à  120

  - manganèse     100 à  120

  -molybdène   -    0,3 à   0,4

  -zinc          70 à   90.

15. Amendement selon l'une quelconque des revendications 13 ou 14, caractérisé en ce que son pH est compris dans la gamme de 6,5 à 8.

16. Amendement selon l'une quelconque des revendications 13 à 15, caractérisé en ce que, en vue de son application à diverses plantes et à divers produits végétaux, il reçoit l'addition d'environ 4,5% en poids de résidus de tabac par rapport au poids total, contribuant à un apport d'azote et de calcium.

Office européen
des brevets

**RAPPORT DE RECHERCHE EUROPEENNE**

Numéro de la demande

EP 80 40 0928

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | <u>BE - A - 863 556</u> (EPARCO)<br>* Revendication 4 * | 5 | A 01 K 1/015<br>C 05 F 3/00 |
| A | <u>US - A - 2 712 811</u> (DOVELL)<br>* En entier * | 16 | |

**DOMAINES TECHNIQUES RECHERCHES (Int. Cl. ³)**

A 01 K
C 05 F

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 26-09-1980 | CRUCHTEN |

OEB Form 1503.1 05.78